# EUROPEAN PATENT APPLICATION

(11) **EP 2 383 962 A1**
(43) Date of publication of application: **02.11.2011**
(21) Application number: 10733540.8
(22) Date of filing: 15.01.2010
(51) Int. Cl.: H04M 1/00, H04M 1/02, H04M 1/2745

(54) **COMMUNICATION TERMINAL AND PORTABLE DEVICE**

(30) Priority: 23.01.2009 JP 2009013360
(71) Applicant: NEC Corporation, Tokyo 108-8001 (JP)
(72) Inventor: TAKATA, Shingo, Tokyo 108-8001 (JP)
(74) Representative: Glawe, Delfs, Moll
(86) International application number: PCT/JP2010/050747
(87) International publication number: WO 2010/084933

(57) **Abstract**

In order to easily use a plurality of cellular phones accordingly and properly, a communication terminal includes: a portable device having a memory-built-in proximity communication device housing unit which houses a memory-built-in proximity communication device sending and receiving information by being approximated to a read-out device and a storage unit which stores user related information, the portable device being removable; and a portable device housing unit which houses the portable device.

## Description

### Technical Field

The present invention relate to a communication terminal and a portable device which makes information possible to be taken out from a communication terminal and transferred to other communication terminals.

### Background Art

Along with reducing price of a cellular phone, the number of users each of whom possesses a plurality of cellular phones has been increasing. Technologies for enabling a user to use data of a telephone book and a history of usage accumulated inside a cellular phone in other cellular phones have been proposed. For example, a technology of a telephone dialup apparatus which reads an electronic address book in a SIM (subscriber identity module) and uses it in a different telephone circuit is disclosed in patent document 1. Also, in patent document 2, there is disclosed a technology of a card type telephone apparatus in which a telephone number and a history of usage registered with an IC (Integrated Circuit) card are shared by a plurality of telephones by replacing the IC card.
[Patent document 1] Japanese Patent Application Laid-Open No. 2003-046634
[Patent document 2] Japanese Patent Application Laid-Open No. 2004-088235

### Disclosure of the Invention

### Technical Problem

The technologies disclosed in patent document 1 and patent document 2 provide only a function to share an electronic address book and a history of used telephone numbers which a SIM card has recorded among a plurality of terminals. Accordingly, in the technologies disclosed in patent document 1 and patent document 2, there is a problem that, among terminals having a function as a memory-built-in proximity communication device such as a noncontact IC card, the data being held in those noncontact IC cards cannot be transferred. Therefore, when a user uses data of a certain communication terminal in other communication terminals, it is necessary to replace a SIM, and, at the same time, to transfer an application which a user has registered with the original terminal and to transfer information recorded in data of a noncontact IC card. As described above, when a plurality of communication terminals are used accordingly and properly, because complex operation is needed for a user, there is a problem that it is not easy to use the plurality of communication terminals accordingly and properly according to its availability.

The present invention has been made in view of such actual situations, and its object is to provide a communication terminal and a portable device that makes information stored in a memory-built-in proximity communication device such as a noncontact IC card and user related information possible to be transferred easily to a plurality of communication terminals, which solves the problem above.

### Technical Solution

A communication terminal of the present invention includes: a removable portable device having a memory-built-in proximity communication device housing means for housing a memory-built-in proximity communication device sending and receiving information by being approximated to a read-out device and a storage means storing user related information; and a portable device housing means for housing the portable device.

A portable device of the present invention is removable and includes: a memory-built-in proximity communication device housing means for housing a memory-built-in proximity communication device sending and receiving information by being approximated to a read-out device; and a storage means for storing user related information.

### Advantageous Effect of the Invention

According to the present invention, it becomes possible to transfer information stored in a memory-built-in proximity communication device to other communication terminals easily, and thus a user can easily use a plurality of communication terminals accordingly and properly according to use conditions.

### Brief Description of the Drawings

Fig. 1 is a block diagram showing an exemplary configuration of a communication terminal according to a first exemplary embodiment;
Fig. 2 is a block diagram showing an exemplary configuration of a portable device according to the first exemplary embodiment;
Fig. 3 is a flow chart showing a procedure example for transferring information from a first communication terminal to a second communication terminal according to the first exemplary embodiment;
Fig. 4 is a block diagram showing an exemplary configuration of a second communication terminal according to the first exemplary embodiment;
Fig. 5 is a block diagram showing an exemplary configuration of a communication terminal according to a second exemplary embodiment;
Fig. 6 is a block diagram showing an exemplary configuration of a portable device according to the second exemplary embodiment;
Fig. 7 is a flow chart showing an example of a procedure for transferring information from a communication terminal to another communication terminal according to the second exemplary embodiment;
Fig. 8 is a block diagram showing another exemplary configuration of the second communication terminal according to the second exemplary embodiment;
Fig. 9 is a block diagram showing yet another exemplary configuration of a communication terminal according to the second exemplary embodiment;
Fig. 10 is a block diagram showing an exemplary configuration of a portable device according to a third exemplary embodiment;
Fig. 11 is a block diagram showing an exemplary configuration of a portable device according to a fourth exemplary embodiment; and
Fig. 12 is a block diagram showing an exemplary configuration of a portable device according to a fifth exemplary embodiment.

### Best Mode for Carrying Out the Invention

Hereinafter, exemplary embodiments of the present invention will be described in detail using the drawings.

### (The first exemplary embodiment)

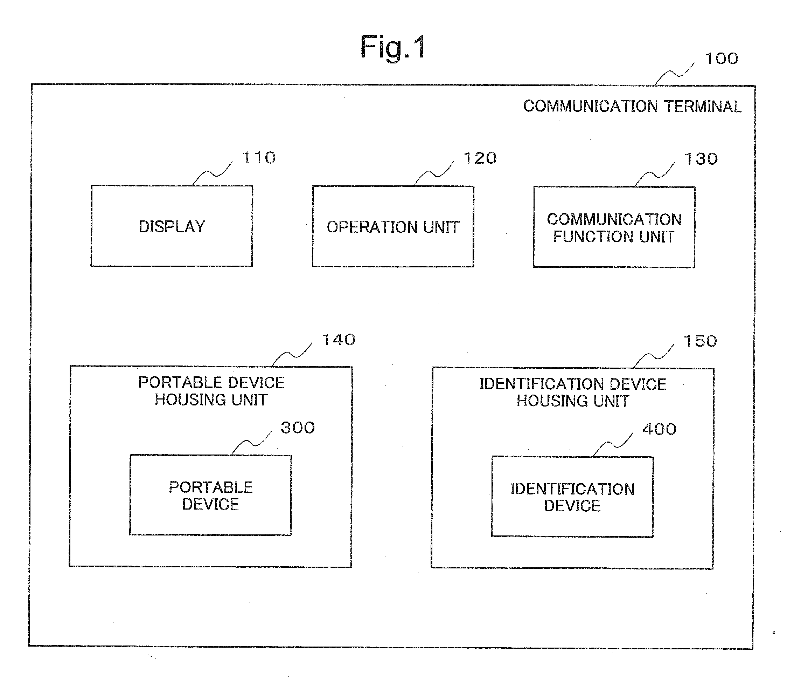

Fig. 1 is a block diagram showing an exemplary configuration of a communication terminal according to the first exemplary embodiment. As shown in Fig. 1, a communication terminal 100 includes a display 110, an operation unit 120, a communication function unit 130, a portable device housing unit 140 and an identification device housing unit 150. Hereinafter, in the first exemplary embodiment, description will be made taking a cellular phone as an example of the communication terminal 100. However, the exemplary embodiment of the present invention is not limited to this.

The display 110 is a display or the like which indicates information. The operation unit 120 is a button or the like for a user to perform input and includes a numeric keypad and function keys. Also, a contact sensing means may be installed in the display 110 to enable a user to operate with direct touch of the display. The communication function unit 130 has a function for performing communication such as telephone and mail. Although not being illustrated here, the communication terminal is equipped with a control unit or the like for operating as a cellular phone.

The portable device housing unit 140 houses a portable device 300. The identification device housing unit 150 houses an identification device 400 storing subscriber information and the like of the communication terminal. The identification device 400 is a SIM (subscriber identity module) card, for example. For example, by removing a SIM card storing an electronic address book from a certain cellular phone, and mounting it on other cellular phones, the same electronic address book can also be used in the other cellular phones.

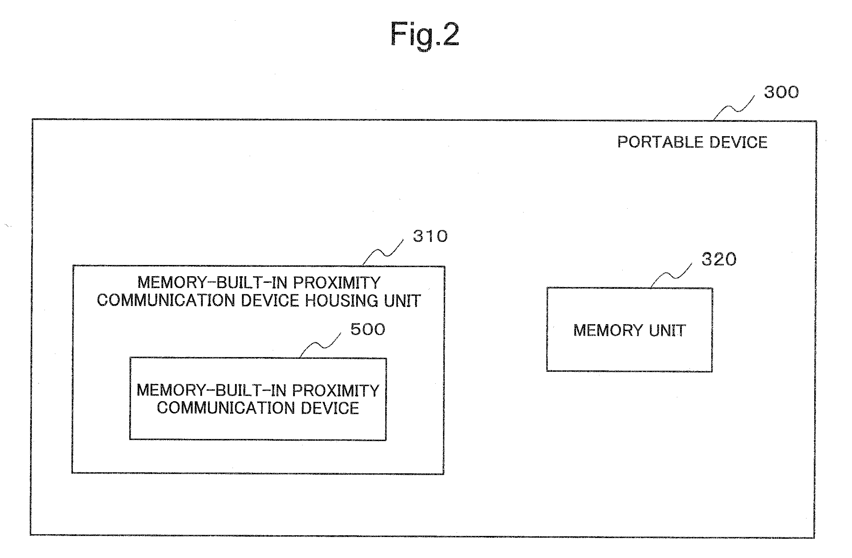

Fig. 2 is a block diagram showing an exemplary configuration of the portable device 300 according to the first exemplary embodiment. As shown in Fig. 2, the portable device 300 has a memory-built-in proximity communication device housing unit 310 and a memory unit 320.

The memory-built-in proximity communication device housing unit 310 houses a memory-built-in proximity communication device 500. The memory unit 320 stores: user related information such as a telephone book, a mail address, a telephone history and a mail history; and other information. The memory-built-in proximity communication device 500 has a function of a noncontact IC card, for example. As a memory-built-in proximity communication device having the function of a noncontact IC card, there is a Felica (registered trademark) chip. By approximating the communication terminal 100 that houses this memory-built-in proximity communication device 500 to a read-out device, it is possible to use the communication terminal 100 as a ticket and as a means to pay for goods in a store.

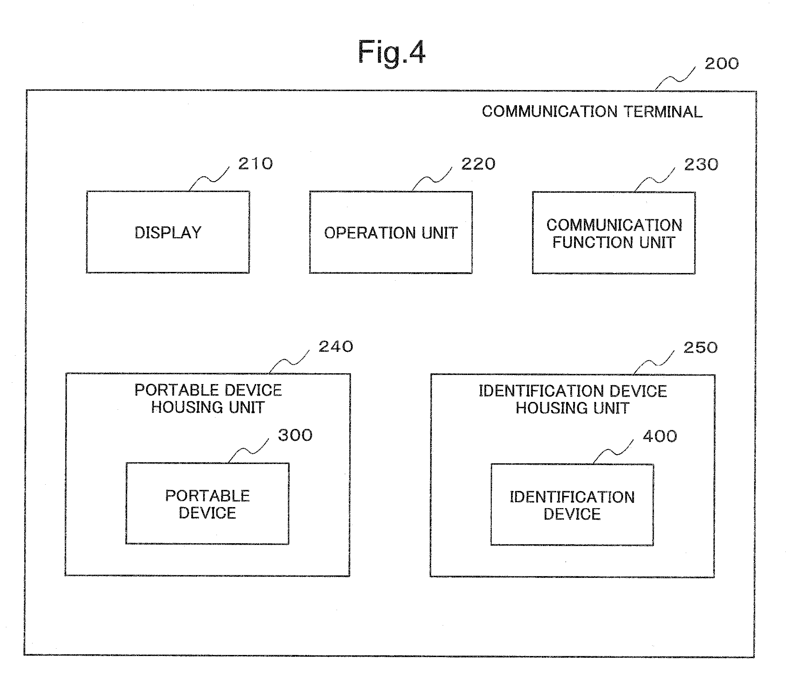

Fig. 4 is a block diagram showing an exemplary configuration of a second communication terminal according to the first exemplary embodiment. The structure of a second communication terminal 200 is the same as that of the communication terminal 100 mentioned above. As shown in Fig. 4, the second communication terminal 200 has a display 210, an operation unit 220, a communication function unit 230, a portable device housing unit 240 and an identification device housing unit 250.

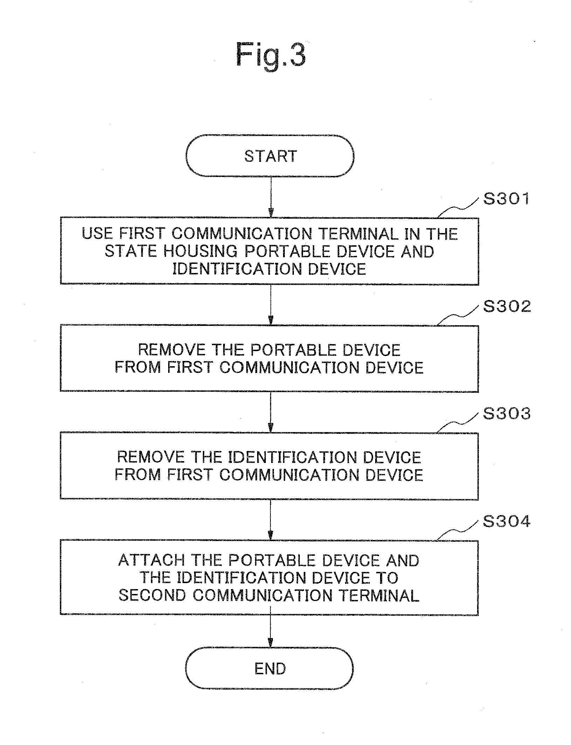

Next, an example of a procedure for transferring information from a communication terminal to another communication terminal according to the first exemplary embodiment will be described using the flow chart shown in Fig. 3. Fig. 3 is a flow chart showing an example, of a procedure for transferring information from the first communication terminal 100 to the second communication terminal 200 according to the first exemplary embodiment.

First, a user is using the communication terminal 100 in the state that the portable device 300 and the identification device 400 are housed in the communication terminal 100 (Step S301). The user removes the portable device 300 from the portable device housing unit 140 of the communication terminal 100 (Step S302). Additionally, the identification device 400 is taken out from the identification device housing unit 150 of the communication terminal 100 (Step S303). Meanwhile, the order of Step S302 and Step S303 is not limited. That is, either the portable device 300 or the identification device 400 may be taken out first.

Next, the portable device 300 and the identification device 400 taken out from the communication terminal 100 are housed in the portable device housing unit 240 and the identification device housing unit 250 of the communication terminal 200, respectively (Step S304).

By transferring the portable device 300 and the identification device 400 from the communication terminal 100 to the communication terminal 200 following the flow described above, the communication terminal 200 can be used as a mobile terminal. The portable device 300 is equipped with the memory-built-in proximity communication device 500. Therefore, by transferring the portable device 300 to a communication terminal 200, it becomes possible to use the communication terminal 200 as a ticket by approximating the information terminal 200 to a read-out device instead of the communication terminal 100, for example. Or, it becomes possible such as to pay for goods in a store using the information terminal 200.

In the first exemplary embodiment, by installing a portable device housing unit in a communication terminal and transferring a portable device to a plurality of communication terminals, data stored in the memory-built-in proximity communication device 500 can be easily transferred to other communication terminals. As a result, a plurality of communication terminals can be easily used accordingly and properly according to a situation that a user uses them.

Meanwhile, in the description of the first exemplary embodiment, the example in which the portable device 300 and the identification device 400 are transferred from the communication terminal 100 to the communication terminal 200 has been explained. However, by providing a memory card housing unit in the communication terminal 100 and 200, a memory card or the like storing information which is not stored in the portable device 300 and the identification device 400 may be also transferred from the communication terminal 100 to the communication terminal 200.

Also, in the first exemplary embodiment, the example in which the portable device 300 and the identification device 400 are transferred from the communication terminal 100 to the communication terminal 200 has been explained for description. However, it is possible to transfer information not only between the communication terminal 100 and the communication terminal 200 but also among a plurality of communication terminals. Therefore, a user can easily use at least two communication terminals accordingly and properly.

### (The second exemplary embodiment)

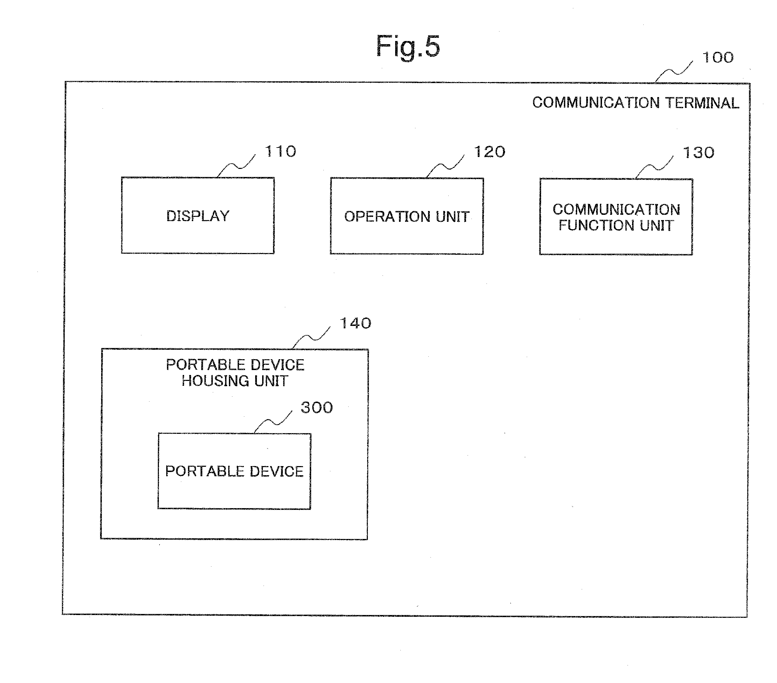

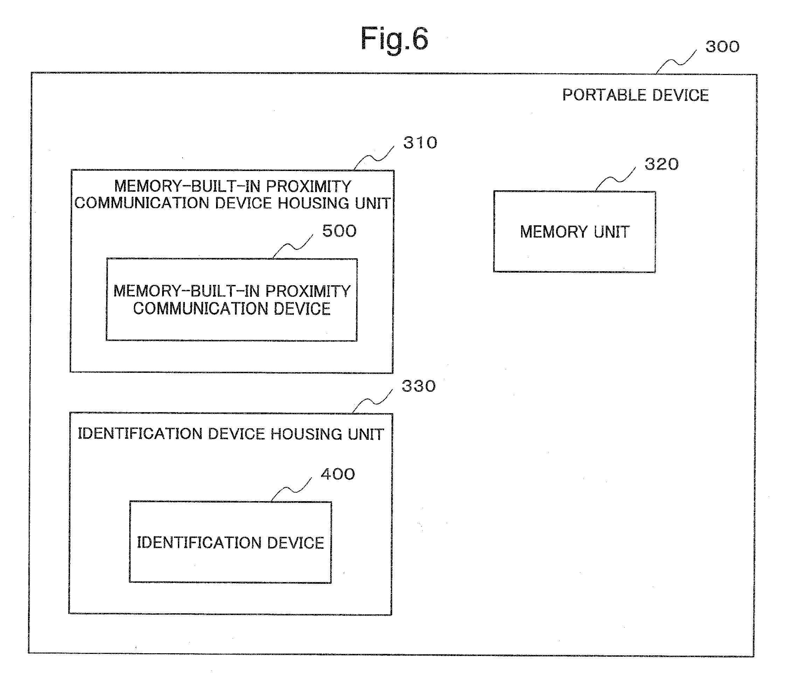

Fig. 5 is a block diagram showing an exemplary configuration of a communication terminal according to the second exemplary embodiment. A communication terminal according to the second exemplary embodiment is different from a communication terminal of the first exemplary embodiment described above in the point that it is not provided with the identification device housing unit 150. Fig. 6 is a block diagram showing an exemplary configuration of a portable device according to the second exemplary embodiment. As shown in Fig. 6, a portable device 300 according to the second exemplary embodiment is different from a portable device of the first exemplary embodiment in the point that it is equipped with an identification device housing unit 330. Meanwhile, the same reference signs are assigned to the same structures, and description will be omitted.

According to the second exemplary embodiment, the portable device 300 is provided with the identification device housing unit 330, and thus it is possible to house an identification device 400 in the portable device 300. This identification device 400 is a SIM card, for example, just like the first exemplary embodiment, and by transferring the identification device 400 from a cellular phone to other cellular phones, the same telephone book can also be used in the other cellular phones. Further, the identification device 400 can be removed from the identification device housing unit 330.

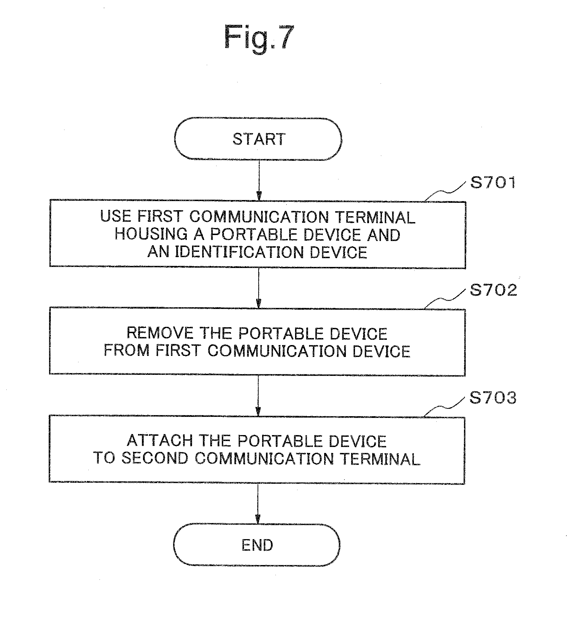

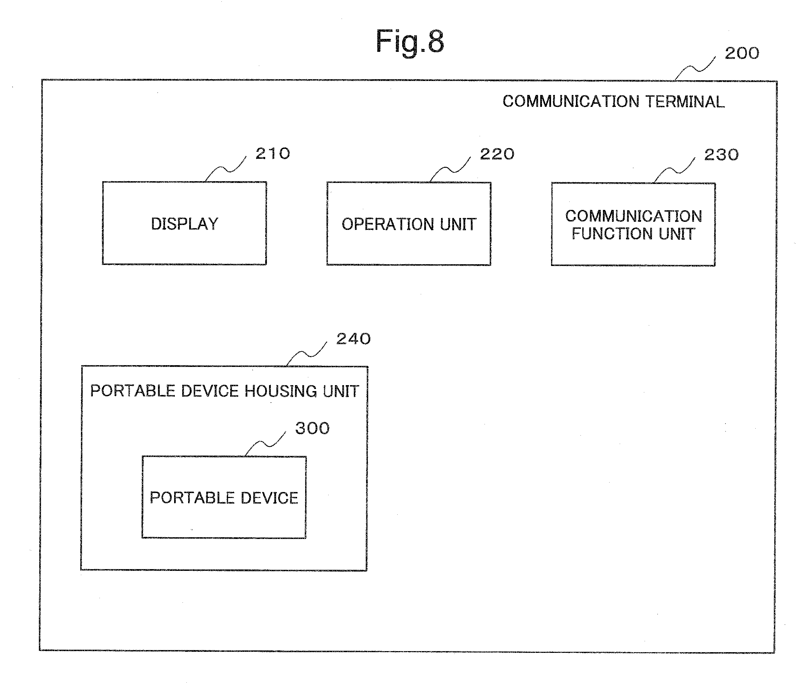

Next, an example of a procedure for transferring information from a communication terminal to another communication terminal according to the second exemplary embodiment will be described using the flow chart shown in Fig. 7. Fig. 7 is a flow chart showing an example of a procedure for transferring information from a first communication terminal 100 to a second communication terminal 200 according to the second exemplary embodiment. Fig. 8 is a block diagram showing an exemplary configuration of the second communication terminal according to the second exemplary embodiment. The communication terminal 200 shown in the second exemplary embodiment is of the same structure as the communication terminals 100 mentioned above, and, as shown in Fig. 8, it includes a display 210, an operation unit 220, a communication function unit 230 and a portable device housing unit 240.

First, a user is using the communication terminal 100 in the state that the portable device 300 is housed in the communication terminal 100 (Step S701). The user removes the portable device 300 which houses the identification device 400 from a portable device housing unit 140 of the communication terminal 100 (Step S702). Next, the portable device 300 taken out from the communication terminal 100 is housed in a portable device housing unit 140 of the communication terminal 200 (Step S703).

By the flow mentioned above, the portable device 300 and the identification device 400 that is housed in the portable device 300 are transferred from the communication terminal 100 to the communication terminal 200. As a result, it becomes possible to use the communication terminal 200 as a mobile terminal. Also, the portable device 300 is equipped with the memory-built-in proximity communication device 500. Therefore, by transferring the portable device 300 to a communication terminal 200, it becomes possible to use the communication terminal 200 as a ticket by approximating the information terminal 200 to a read-out device instead of the communication terminal 100, for example. Or, it becomes possible to pay for goods in a store using the information terminal 200.

In the second exemplary embodiment, an identification device housing unit is provided in a portable device, and the portable device is transferred to a plurality of communication terminals. As a result, information on a portable device and an identification device can be transferred to other communication terminals more easily. Therefore, a user can more easily use a plurality of communication terminals accordingly and properly according to their availability.

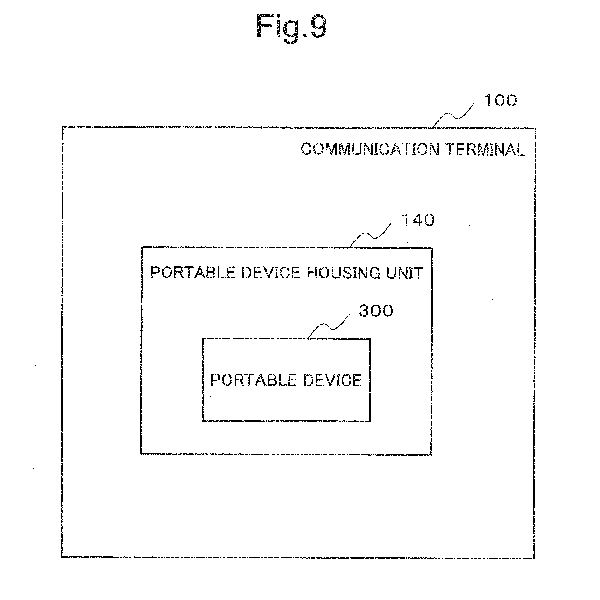

Fig. 9 is a block diagram showing yet another exemplary configuration of a communication terminal according to the second exemplary embodiment. The second exemplary embodiment has been described citing an example in which the communication terminal 100 has the display 110, the operation unit 120, the communication function unit 130 and the portable device housing unit 140. However, when the communication terminal 100 has the portable device housing unit 140 as shown in Fig. 9, a user can more easily use a plurality of communication terminals accordingly and properly according to their availability without having all aforementioned configurations.

### (The third exemplary embodiment)

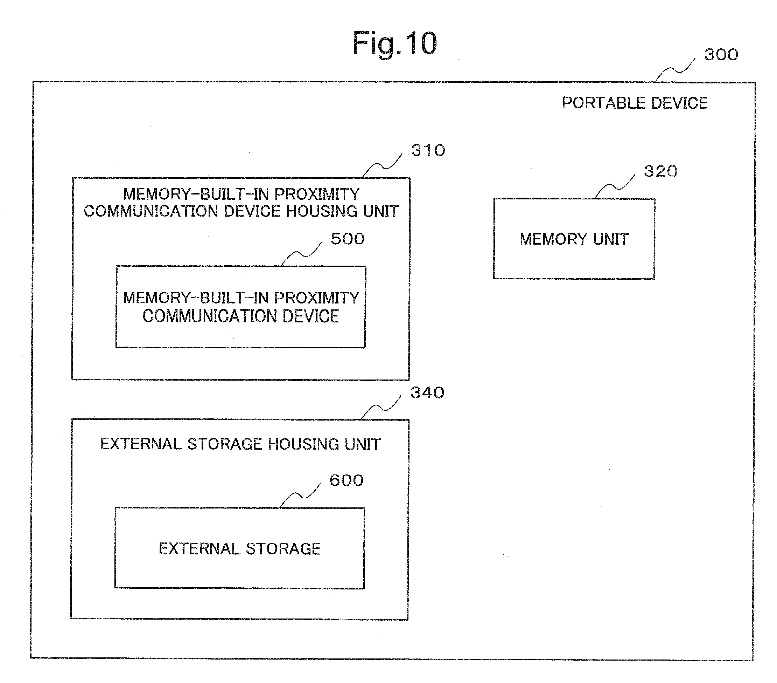

Fig. 10 is a block diagram showing an exemplary configuration of a portable device according to the third exemplary embodiment. The point that a portable device 300 according to the third exemplary embodiment shown in Fig. 10 is different from the portable device 300 of the first exemplary embodiment shown in Fig. 2 is that it has an external storage housing unit 340. The structure of a first communication terminal 100 according to the third exemplary embodiment is similar to that of the communication terminal 100 of the first exemplary embodiment except for a structure of the portable device 300 according to the third exemplary embodiment. Meanwhile, the same reference signs are assigned to the same structures, and description is omitted.

The external storage housing unit 340 houses an external storage 600. This external storage 600 is a memory card, for example, and can store various kinds of information such as picture and music. The external storage 600 can be removed from the external storage housing unit 340 and transferred to a computer or the like. Accordingly, the first communication terminals 100 according to the third exemplary embodiment can share information with a computer such as a PC (Personal Computer).

A flow of processing for transferring information from the first communication terminal 100 to a second communication terminal 200 according to the third exemplary embodiment is the same as that of the first exemplary embodiment, and therefore the description will be omitted. Further, the communication terminal 200 according to the third exemplary embodiment has also the same structure as that of the communication terminal 100 according to the third exemplary embodiment mentioned above.

In the third exemplary embodiment, because a portable device has an external storage housing unit which houses an external storage, larger amount of information can be transferred to other communication terminals easily. As a result, a user can easily use a plurality of communication terminals accordingly and properly according to their availability.

### (The fourth exemplary embodiment)

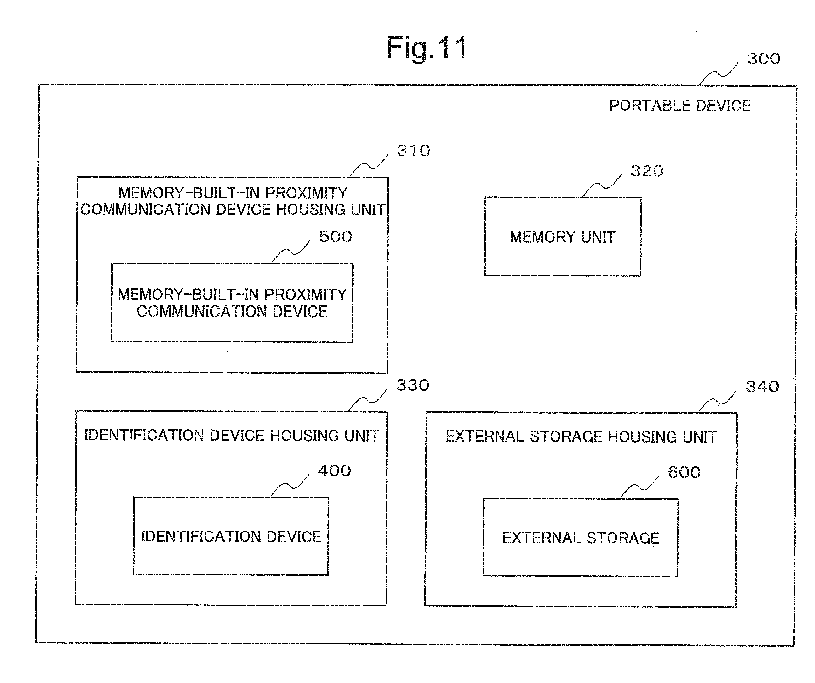

Fig. 11 is a block diagram showing an exemplary configuration of a portable device according to the fourth exemplary embodiment. The point that a portable device 300 according to the fourth exemplary embodiment shown in Fig. 11 is different from the portable device 300 of the first exemplary embodiment is that it has an identification device housing unit 330 and an external storage housing unit 340. The structure of a communication terminal 100 according to the fourth exemplary embodiment is the same as the communication terminal of the second exemplary embodiment shown in Fig. 5 except for the structure of the portable device 300 according to the fourth exemplary embodiment. Meanwhile, the same reference signs are assigned to the same structures, and therefore the description is omitted. An identification device 400 and an external storage 600 can be removed from the identification device housing unit 330 and the external storage housing unit 340, respectively.

A flow of processing for transferring information from the first communication terminal 100 to a second communication terminal 200 according to the fourth exemplary embodiment is the same as that of the first exemplary embodiment, and therefore the description is omitted. Further, the communication terminal 200 shown in the fourth exemplary embodiment has also the same structure as that of the communication terminal 100 above.

In the fourth exemplary embodiment, a portable device includes an identification device housing unit for housing an identification device and an external storage housing unit for housing an external storage. By uniting an identification device and an external storage with a portable device, installation and removal of them to and from communication terminals becomes possible. As a result, larger amount of information can be transferred to other communication terminals more easily, and a user can more easily use a plurality of communication terminals accordingly and properly according to their availability.

### (The fifth exemplary embodiment)

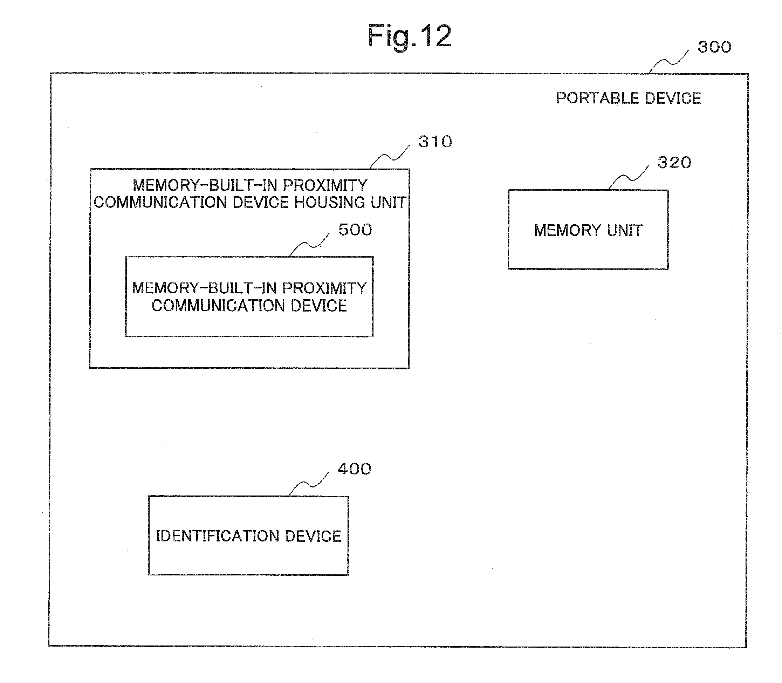

Fig. 12 is a block diagram showing an exemplary configuration of a portable device according to the fifth exemplary embodiment. The point that a portable device 300 according to the fifth exemplary embodiment shown in Fig. 12 is different from the portable device 300 of the first exemplary embodiment is that it has an identification device 400. The structure of a communication terminal 100 according to the fifth exemplary embodiment is similar to that of the communication terminal of the second exemplary embodiment shown in Fig. 5 except for a structure of the portable device 300 according to the fifth exemplary embodiment. Meanwhile, the same reference signs are assigned to similar structures, and therefore the description is omitted.

A flow of processing for transferring information from the first communication terminal 100 to a second communication terminal 200 according to the fifth exemplary embodiment is the same as that of the second exemplary embodiment, and description will be omitted. Further, the communication terminal 200 shown in the second exemplary embodiment has also the same structure as the communication terminal 100 mentioned above.

In the fifth exemplary embodiment, because a portable device incorporates an identification device, the transfer to other communication terminals becomes easier. Therefore, a user can more easily use a plurality of communication terminals accordingly and properly according to use conditions.

Meanwhile, a semiconductor memory unit, an optical and/or magnetic memory unit or the like can be used as a computer-readable recording medium for storing a program for a CPU (Central Processing Unit) to execute such as processing for a communication terminal to perform communication and processing for using the terminal as a commutation ticket and for using it for paying for goods in a store by a memory-built-in proximity communication device performing communication.

Although the present invention has been described with reference to the exemplary embodiments above, the present invention is not limited to the exemplary embodiments mentioned above. Various modifications which a person skilled in the art can understand in the scope of the present invention can be performed in the composition of the present invention and details.

This application claims priority based on Japanese Patent Application No. 2009-013360 filed on January 23, 2009, the disclosure of which is incorporated herein in its entirety.

## Claims

1. A communication terminal comprising:
a portable device including a memory-built-in proximity communication device housing means for housing a memory-built-in proximity communication device sending and receiving information by being approximated to a read-out device and a storage means for storing user related information, the portable device being configured to be removable; and
a portable device housing means for housing the portable device.

2. The communication terminal according to claim 1 further comprising an external storage housing means for housing an external storage.

3. The communication terminal according to claim 1, wherein the portable device comprises an external storage housing means for housing an external storage.

4. The communication terminal according to any one of claims 1-3, wherein the communication terminal further comprises an identification device housing means for housing an identification device storing subscriber information.

5. The communication terminal according to any one of claims 1-3, wherein the portable device comprises an identification device housing means for housing an identification device storing subscriber information.

6. The communication terminal according to any one of claims 1-3, wherein the portable device comprises an identification device storing subscriber information.

7. The communication terminal according to claim 4, wherein the identification device is a SIM (subscriber identity module) card.

8. The communication terminal according to claim 1, wherein the memory-built-in proximity communication device is a Felica (registered trademark) chip.

9. A portable device configured removable comprising:
a memory-built-in proximity communication device housing means for housing a memory-built-in proximity communication device sending and receiving information by being approximated to a read-out device; and
a storage means for storing user related information.

10. The portable device according to claim 9, further comprising an external storage housing means for housing an external storage.

11. The portable device according to claim 9 or 10, further comprising an identification device housing means for storing an identification device storing subscriber information.

12. The portable device according to claim 9 or 10, comprising an identification device storing subscriber information.

13. The portable device according to claim 12, wherein the identification device is a SIM card.

14. The portable device according to claim 9, wherein the memory-built-in proximity communication device is a Felica chip.
